# EUROPEAN PATENT SPECIFICATION

(11) **EP 3 908 537 B1**
(45) Date of publication and mention of the grant of the patent: **06.09.2023**
(21) Application number: 20708433.6
(22) Date of filing: 09.01.2020
(51) Int. Cl.: B65D 75/32, A23G 9/44, B65D 85/78

(54) **CONFECTION PACKAGE**
KONFEKTPACKUNG
EMBALLAGE DE CONFISERIE

(30) Priority: 10.01.2019 NL 2022367
(43) Date of publication of application: 17.11.2021
(73) Proprietor: What The Future B.V., 1018 LE Amsterdam (NL)
(72) Inventor: AUFENAST, Edmund David, 1795 AG De Cocksdorp (NL)
(74) Representative: Cramwinckel, Michiel
(86) International application number: PCT/EP2020/050431
(87) International publication number: WO 2020/144282

(56) References cited:
- WO-A1-2017/125488
- WO-A1-2018/212572
- JP-U- S 594 291
- US-A- 2 151 282
- US-A- 4 001 440

## Description

The invention is directed to a confection package comprising of a plastic mould product having a space for a confection filled with a freezable or frozen confection and a space for one end of a handle. The space for the confection and the space for one end of a handle are positioned below a planar surface and a planar cover sheet is sealed to the planar mould product.

GB20175327 describes such a confection package wherein the space for the confection and the space for one end of a handle are fluidly connected. The confection as present in the space for the confection is in a frozen form and will therefore not flow into the space for the handle. A problem is that some of the frozen confection may enter the space for the handle. For example when it part of the confection melts.

Such a confection package is described in US4001440. This publication describes a confection package consisting of a chamber for a frozen confection provided with a handle. Such products are also referred to as ice lollypops. The chamber for the frozen confection has an outer appearance of a character. The exterior part of the handle is placed in a slot. Slot and chamber for the confection are present in a single part of the package. A flat seal enclosed the chamber and slot of the package at their upper end. The handle is kept in its position by a peg present in the slot which locks with a similarly shaped aperture in the exterior part of the handle.

WO2018/212572 describes a confection package in a plastic mould product wherein the handle extends from the package. In one embodiment the part of the handle which extends from the confection is provides with grooves with interconnect with grooves on the confection package. The plastic mould product comprises a horizontal planar surface and a first recess space for a confection. A planar cover sheet is sealed to the planar surface of the plastic mould product and a volume of a freezable or frozen confection as present within the first recess space. The handle comprises an interior part of the handle which is positioned within the volume of freezable or frozen confection in the first recess space and an exterior part which in use will allow the volume of freezable confection to be manually held by a user. The interior part of the handle is connected to the exterior part of the handle by means of an offset intermediate part of the handle.

WO2017/125488 describes a confection package consisting of a plastic mould product. The plastic mould product has a horizontal planar surface, a first recess space for a confection, a second recess space for one end of a handle, a planar cover sheet, a volume of a freezable or frozen confection as present within the first recess space and a handle. An intermediate part of the handle is positioned just below planar cover sheet and positioned in a third recess space. Third recess space has a flat base surface on which the intermediate part of the handle rests.

A disadvantage of the confection package of WO2017/125488 is that liquid confection may flow from the first recess space to the second recess space before the confection is frozen in an industrial packaging process. This does not have a good appearance which is undesirable for a commercial confection package. The aim of the present invention is to provide a confection package which limits the risk that liquid confection flows towards the second recess space..
This is achieved by the following confection package comprising of
- a plastic mould product comprising a horizontal planar surface, a first recess space for a confection, a second recess space for one end of a handle,
- a planar cover sheet sealed to the planar surface of the plastic mould product,
- a volume of a freezable or frozen confection as present within the first recess space, and
- a handle comprising an interior part of the handle which is positioned within the volume of freezable or frozen confection in the first recess space and an exterior part which in use will allow the volume of freezable confection to be manually held by a user and which exterior part is positioned in the second recess space, wherein the interior part of the handle is connected to the exterior part of the handle by means of an offset intermediate part of the handle, wherein
- the intermediate part of the handle is positioned below planar cover sheet and positioned in a third recess space which third recess space connects first and second recess space and is provided with a base surface on which the intermediate part of the handle rests and is provided with side walls running alongside intermediate part, and wherein the base surface is provided with one or more grooves, wherein the handle consists of at least 4 bends, wherein a first bend is between the interior part and intermediate part directing the handle from the confection towards the planar surface, a second bend which directs a the intermediate part of the handle along the planar surface, a third bend which directs the handle towards the second recess space and a fourth bend which directs the handle in the direction of the second recess space, and wherein the interior part and the exterior part of the handle are aligned and have the same shape such that the handle is shape symmetrical.

Applicants found that by providing grooves on the surface on which the intermediate part rests less or even no fluid flows from the space for a confection to the space for one end of a handle.

The invention and further advantages will be further described below. In the description terms like upper, lower, horizontal, vertical, above and below refer to the preferred position of the confection package when it is filled with non-frozen confection. These terms used to describe the confection package more clearly and are not intended to limit the invention to only a confection package in this position.

The third recess in the planar sheet is provided with a base surface on which the intermediate part of the handle rests. This base surface is provided with one or more grooves. Preferably this base surface is provided with at least two groves running from one side wall to the opposite side wall of the third recess space. The maximum number of grooves will be determined by the dimensions of the recess. A suitable number of grooves may be 1, 2, 3, 4 or 5. Without wishing to be bound by the following theory applicants believe that the grooves avoid fluid from flowing through the connecting third recess due to the capillary action on the fluid when the stick would be supported by a flat surface. The depth of a single groove should thus be such that the capillary flow is avoided and preferably the depth is at least 1 mm, more preferably at least 2 mm. This in contrast to the grooves provided on both the handle and a plastic mould as described in WO2018/212572. The resulting channel of this package between the two surfaces would enhance a capillary action and thus not avoid fluid escaping from the confection package.

The handle may have any shape which makes the handle suitable to bond to the frozen confection and to be manually held by a user. The handle or at least the intermediate part which rests on the grooves suitably has a flat lower surface. The flat lower surface resting on the grooves avoid that fluid travels due to capillary forces through the connecting third recess because a continuous small channel at the third recess is avoided. The upper surface may also be flat or for example rounded. The upper rounded surface may enhance the sealing with the planar cover sheet.

The ice lollypop when removed from the confection package will for practical reasons have a handle with an exterior part extending away from the mass of confection. The interior part of the handle will suitably be present centrally or about centrally within the mass of confection. The interior part and the exterior part of the handle may extend in a parallel longitudinal direction. It is however not excluded that the interior part and the exterior part of the handle are positioned under an angle. The handle has an interior part which is aligned with the exterior part of the handle. The interior part and the exterior part have the same shape such that the handle is shape symmetrical. Shape symmetrical handles are preferred because it simplifies the automatic placing the handles in the plastic mould product. Namely a so-called pick and place machine, which may be used for placing the handles, does not have to direct the handle in one direction but can randomly position the handle in the space for one end of the handle and in the space for a confection.

The interior part and the exterior part of the handle may be provided with one or more snap-fit type connectors. Any openings or extensions on the surface of the interior part of the handle may ensure a more intimate bonding of the convection with the handle. The snap-fit type connectors have the advantage in that the user can play with the handles by connecting more than one handle after consuming the confection. This is favourable for the environment because the user will more likely keep the handles and not through them away and pollute the environment. The connector preferably consists of a male type element with a female type element which can connect in a snap-fit manner. Such connectors are well known and for example described in GB866557, US3005282, US4552541, US4744780, US4919635, US5230195, US5471808, US2011045733, US2016263489 and US2014227937. The male type element is preferably an extension present at the upper and/or lower side of the handle and has a cylindrical or frusto-conical outer surface. The female type element may be any design opening which can receive the male type element and result in a snap-fit connection with such a male type element. The connectors are preferably spaced such that different arrangements between more than one handle are possible. The snap fit connection is preferably such that it also allows pivoting along the connection when two handles are connected by means of one snap-fit connection.

An air gap may be present between the exterior part of the handle and the bottom of the space for one end of a handle. This avoids that the handle can freeze to the bottom of the space for one end of the handle.

The second recess space may be provided with an extension which can make a friction connection with the end of the handle. When the handle is placed in the first, second and third recess the handle can be fixed by gently pushing the end of the handle to below such an extension such that the exterior part of the handle is trapped within the second recess. This is advantageous when liquid confection is poured into the first recess. Because of this fixation tilting of the handle will then be avoided. Tilting of the handle when filling the first recess may result in spoilage of the liquid. Tilting during freezing of the liquid confection is also not desired. The extension should be such that a user can withdraw the extension from the second recess without having to use excessive force. The dimensions of such an extension will thus depend on the required fixation and withdrawal forces and the materials used for the handle and mould product.

The freezable confection may be frozen or non-frozen. The confection package may be stored and distributed at ambient temperature wherein the confection is not frozen. The end user may for example freeze the non-frozen confection just before consumption at her or his one home. Because the space for a confection and the space for one end of a handle in the plastic mould product are fluidly not connected any risk that liquid confection flows into the space for one end of a handle is low.

The plastic mould product may be made of polymer materials, such as those made from polyester, polyolefin, polypropylene, polystyrene and polyamide. Especially preferred are co-extruded sheets of amorphous polyester and polyolefin, such as that sold under the Registered Trademark MP 300 (Wipak, Poland). The planar cover sheet may be a plastic film, for example a polyester film, especially a biaxilally-orientated polyester film such as the one sold under the registered trademark BIAXER (Wipak, Poland). The film may be metallised with for example aluminium to increase the insulating properties of the package.

The confection package according to the invention may be manufactured in a process comprising the following steps:
(i) combining the handle with the plastic mould,
(ii) adding a non-frozen freezable confection as a liquid to the space for a confection, and
(iii) sealing a planar cover sheet to the horizontal planar surface of the plastic mould product.

Suitably in step (ii) the non-frozen freezable confection is added up to the level defined by the elevation of the base surface of the third recess space.

The plastic mould product may be made by any known manufacturing method, such as for example injection moulding, blow moulding or rotational moulding and is preferably manufactured by thermoforming using a film and a master mould. The master mould used may have any shape and may be made from any material. Typically such a master mould is made from a metal and formed by subtractive manufacturing wherein the master mould is manufactured by a controlled material-removal process using one or more machining tools. This method is time consuming and will preferably be used when making a master mould suited to make large numbers of the same plastic moulded products. When one desires to manufacture plastic mould products according to the invention having varying designs in small numbers it is preferred to manufacture the master mould by means of addition manufacturing, also referred to as 3D-printing. Applicants found that by using 3D printing it is possible to simply make a master mould having a bespoke shape which can be economically used for making plastic moulded products in a relatively small number.

The above 3D printing is especially used in a method which allows a client located at their computer to transmit data via a data communication network to a computer under control of a manufacturer of the master mould. The client computer could be a traditional desktop computer, a laptop, or tablet, or a mobile device such as a smart-phone, and preferably remote from the mould manufacturer's computer. The data transmitted across the network is a representation of the shape of the frozen confection and thus of the plastic moulded product. This could be in the form of a photograph or other 2-dimensional graphic to be interpreted by the master mould manufacturer to form a 3-D model, or a digital representation of a 3-D model itself. The data communication network would typically be the Internet.

The supplier receives the data, which is then prepared for making the master mould used in the thermoforming process. A stage of 3-D model optimisation may be included in the process, wherein the optimisation may comprise any one of the following steps:
i) Transformation of a 2-D representation of an object into a 3-D model. This could be carried out automatically with image processing software, or could include or consist of input from a human operative.
ii) Removal of undercuts in a 3-D model so produced, or received by the supplier, to ensure that the plastic moulded product can be readily removed from the master mould after solidification.
iii) Removal of unwanted or unnecessary background information or image content that might otherwise lead to unwanted material at the edges of the plastic moulded product.
iv) Scaling of the 3-D model, either maintaining the aspect ratio in all three dimensions, or selectively scaling one or two dimensions such the 3D printing produces master moulds that may be accommodated in the forming station and/or produces a desired master mould volume. Additional optimisation of small details and/or addition of additional supports or chamfering to improve the structural rigidity of the products may be performed.

Following optimisation of the 3-D model, a mould is created by the use of 3D printing. A number of 3-D printing technologies will be available to the skilled addressee, printing in a range of materials including plaster (e.g. with the 3-D printer sold under the Registered Trademark "ProJet^{®} 660 Pro" by 3D systems Inc., USA), thermoplastics, photopolymerised polymers, or thermally-sintered materials. In particularly preferred embodiments, the master mould is produced using thermal sintering (preferably by laser) of materials such as that sold under the Registered Trademark Alumide^{®}, and comprising a powdered composition of polyamide and powdered aluminium. The inventors have found that such a process and material produce a master mould that is particularly effective at resisting the temperatures applied in the thermoforming process.

When the master mould is made by 3D printing using a material having a low thermal conductivity as described above it is preferred that the mould is provided with a number of openings which fluidly connect the side of the mould facing the mould product and the opposite side. The thickness of the mould is preferably between 0.5 and 5 mm. The holes are typically less than 2 mm in diameter, and preferably less than 1 mm in diameter. The openings allow air to escape through the mould during the forming process. The mould is further suitably provided with channels for passage of cooling air. Cooling of the mould enhances the moulded product to solidify into its desired shape in the mould.

To form a plastic mould product a sheet of thermoplastic material is placed over the master mould and a pressure differential is created over the sheet material while the material is heated above its softening point. The pressure differential is typically created by use of a vacuum below the sheet with heating carried out by an infra-red source. The mould forming process is well- known in the art as vacuum forming. Particularly preferred materials for forming the moulded product are sheet polymeric materials, such as those made from polyester, polyolefin, polypropylene, polystyrene and polyamide. Especially preferred are co-extruded sheets of amorphous polyester and polyolefin, such as that sold under the Registered Trademark MP 300 (Wipak, Poland). The sheet materials preferably have a thickness of less than 1 mm and even more preferably between 100 and 500 microns.

The above described thermoforming process and the above described process to make the confection package is suitably performed in an automated thermoforming apparatus comprising of a plastic mould product forming station which provides the plastic mould product by thermoforming, a handle placing station, a non-frozen confection loading station, a sealing station and a cutting station.

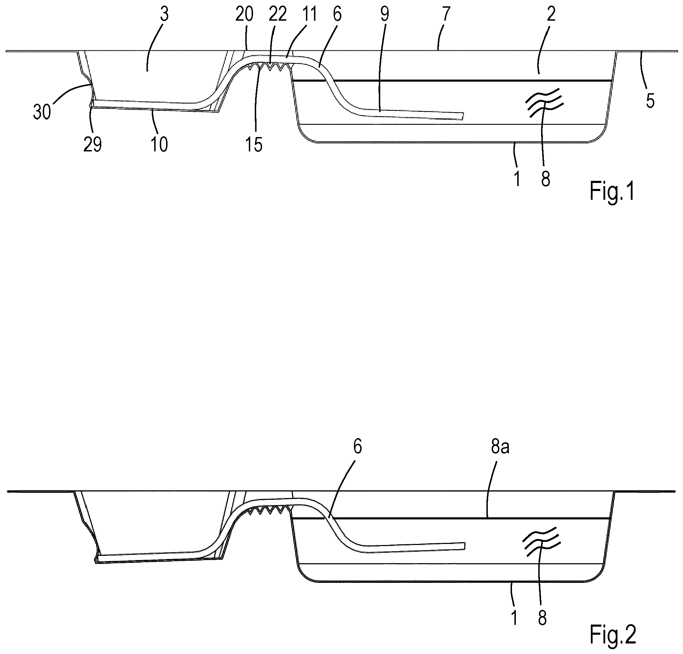

The invention will be further illustrated by making use of Figures 1-5.

Figure 1 schematically shows a cross section of a confection package according to the present invention. A plastic mould product (1) is shown having a horizontal planar surface (5). In the surface (5) a first recess space (2) for a confection (8), a second recess space (3) for one end (10) of a handle (6) and a third recess space (20) for the intermediate part (11) of the handle is shown. A planar cover sheet (7) sealed to the planar surface (5) of the plastic mould product (1). A volume of a freezable or frozen confection (8) is present within the first recess space (2). The interior part (9) of the handle (6) is positioned within the volume of freezable or frozen confection (8). The exterior part (10) of the handle will allow the volume of freezable confection (8) to be manually held by a user when the confection is taken out of the package. This exterior part (10) is positioned in the second recess space (3). The end (29) of the handle (6) is snap fit positioned below extension (30). The material of the plastic mould product (1) will allow some flexibility of extension (30) such that when placing the handle (6) it can be snapped and fit into a position as shown in Figure 1.

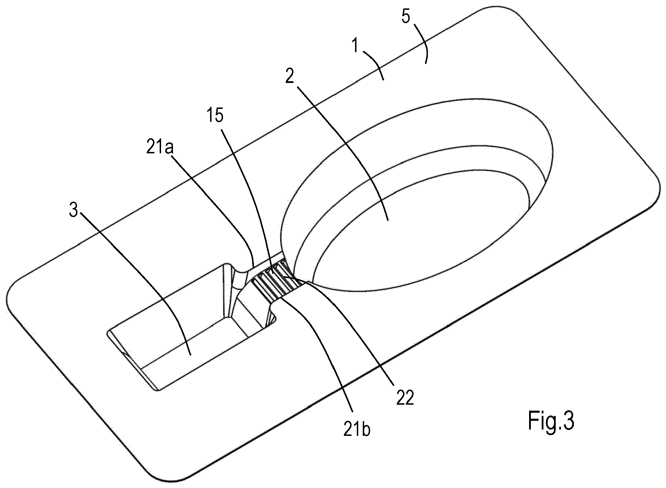

Figure 1 shows third recess (20) provided with a base surface (15) which surface is provide with 4 grooves (22). The grooves (22) run from one side wall (21a) to opposite side wall (21b) as shown in Figure 3. The intermediate part (11), provided with a flat lower surface, of the handle rests on the grooves (22) of base surface (15) and is positioned below planar cover sheet (7). The third recess (20) is open to both first recess space (2) and second recess space (3) thereby connecting both spaces. The elevation of the base surface (15) of third recess space (20) is such that it is suitably above the level (8a) of the volume of freezable or frozen confection (8) as shown. In spite of this liquid confection may still try to enter the third recess space during transport and the like. By having grooves (22) in base surface (15) a effective barrier is created which avoids fluid from entering second recess (3) due to capillary action.

Figure 2 is a variant of the convection package of Figure 1. The difference is the orientation of handle (6) within the package. In Figure 1 the handle is angled backwards while in figure 2 the handle is angled forwards within the confection.

Figure 3 shows the confection package of Figure 1 without the cover sheet (7), confection (8) and handle (6). The three dimensional view from above shows planar surface (5) and the first (2), second (3) and third (20) recess. Side wall (21a, 21b) run from the first recess (2) to second recess (3). The grooves (22) run from side wall (21a) to side wall (21b) and are oriented perpendicular to the longitudinal direction of the handle (6). This orientation is preferred because it will most effectively avoid ingress of fluid due to capillary forces because there is no channel fluidly connecting the first recess space (2) with the second recess space (3) and having a continuous small distance between the surface of the base surface (15) and the lower flat surface of the intermediate part (11).

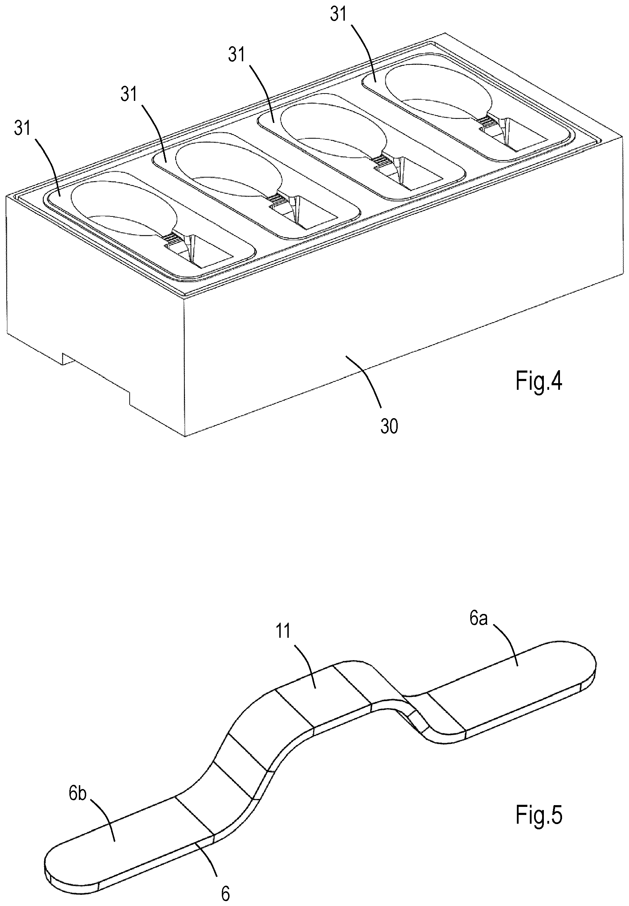

Figure 4 shows a master mould (30) provided with 4 master mould forms (31) having the shape of the plastic mould product (1) of Figure 1. Such a master mould (30) is used in a plastic mould product forming station which provides the plastic mould product by thermoforming. Such a forming station is preferably part of an automated thermoforming apparatus further comprising of a handle (6) placing station, a non-frozen confection (8) loading station, a sealing station and a cutting station. The apparatus may suitably manufacture trays consisting of multiple plastic mould products (1) as shown in Figures 1-3. For example a tray of 4 by 6 plastic mould products (1) filled with liquid confection (8) may be obtained. Such a tray may then be placed in a freezer to solidify the confection (8). After solidification individual confection packages may be obtained by cutting.

Figure 5 shows a handle (6). As shown ends (6a) and (6b) have the same shape. This shape symmetrical handle is advantageous because it simplifies placing handle (6) in mould product (1). This because both ends (6a,6b) may be placed in recess (2) or recess (3) resulting in the same product.

## Claims

1. Confection package comprising of
- a plastic mould product (1) comprising a horizontal planar surface (5), a first recess space (2) for a confection, a second recess space (3) for one end of a handle (6),
- a planar cover sheet (7) sealed to the planar surface (5) of the plastic mould product (1),
- a volume of a freezable or frozen confection (8) as present within the first recess space (2), and
- a handle (6) comprising an interior part (9) of the handle (6) which is positioned within the volume of freezable or frozen confection (8) in the first recess space (2) and an exterior part (10) which in use will allow the volume of freezable confection (8) to be manually held by a user and which exterior part (10) is positioned in the second recess space (3), wherein the interior part (9) of the handle is connected to the exterior part (10) of the handle by means of an offset intermediate part (11) of the handle, wherein
- the intermediate part (11) of the handle (6) is positioned below planar cover sheet (7) and positioned in a third recess space (20) which third recess space (20) connects first and second recess spaces and is provided with a base surface (15) on which the intermediate part (11) of the handle rests and is provided with side walls (21a,21b) running alongside intermediate part (11), wherein base surface (15) is provided with one or more grooves (22), wherein the handle (6) consists of at least 4 bends, wherein a first bend (23) is between the interior part (9) and intermediate part (11) directing the handle from the confection towards the planar surface (5), a second bend (24) which directs a the intermediate part (11) of the handle along the planar surface (5), a third bend (26) which directs the handle towards the second recess space (3) and a fourth bend (27) which directs the handle (6) in the direction of the second recess space (3), and
wherein the interior part (9) and the exterior part (10) of the handle (6) are aligned and have the same shape such that the handle is shape symmetrical.

2. Confection package according to claim 1, wherein base surface (15) is provided with at least two grooves (22) running from one side wall (21a) to the opposite side wall (21b) of third recess (20).

3. Confection package according to any one of claims 1-2, wherein the intermediate part(11) of the handle (6) has a flat lower surface.

4. Confection package according to any one of claims 1-3, the second recess space(3) is provided with an extension (30) which fixes the handle by means of a snap connection with the end (29) of the handle (6).

5. Confection package according to any one of claims 1-4, wherein the freezable confection is not frozen.

## Patentansprüche

1. Süßwarenverpackung, bestehend aus
- einem Kunststoffformprodukt (1), umfassend eine horizontale ebene Oberfläche (5), einen ersten Aussparungsraum (2) für eine Süßware, einen zweiten Aussparungsraum (3) für ein Ende eines Griffs (6),
- einer ebenen Abdeckschicht (7), die an der ebenen Oberfläche (5) des Kunststoffformprodukts (1) abgedichtet ist,
- einem Volumen einer einfrierbaren oder eingefrorenen Süßware (8), wie sie innerhalb des ersten Aussparungsraums (2) vorhanden ist, und
- einem Griff (6), umfassend einen Innenteil (9) des Griffs (6), der innerhalb des Volumens von einfrierbarer oder eingefrorener Süßware (8) in dem ersten Aussparungsraum (2) positioniert ist, und einen Außenteil (10), der in Verwendung dem Volumen der einfrierbaren Süßware (8) ermöglicht, durch einen Benutzer manuell gehalten zu werden, und wobei der Außenteil (10) in dem zweiten Aussparungsraum (3) positioniert ist, wobei der Innenteil (9) des Griffs mittels eines versetzten Zwischenteils (11) des Griffs mit dem Außenteil (10) des Griffs verbunden ist, wobei
- der Zwischenteil (11) des Griffs (6) unter der ebenen Abdeckschicht (7) positioniert und in einem dritten Aussparungsraum (20) positioniert ist, wobei der dritte Aussparungsraum (20) einen ersten und einen zweiten Aussparungsraum verbindet und mit einer Basisoberfläche (15) versehen ist, auf der der Zwischenteil (11) des Griffs ruht und mit Seitenwänden (21a, 21b) versehen ist, die neben dem Zwischenteil (11) verlaufen, wobei die Basisoberfläche (15) mit einer oder mehreren Nuten (22) versehen ist, wobei der Griff (6) aus mindestens 4 Biegungen besteht, wobei eine erste Biegung (23) zwischen dem Innenteil (9) und dem Zwischenteil (11) liegt, die den Griff von der Süßware zu der ebenen Oberfläche (5) führt, eine zweite Biegung (24), die einen den Zwischenteil (11) des Griffs entlang der ebenen Oberfläche (5) führt, eine dritte Biegung (26), die den Griff zu dem zweiten Aussparungsraum (3) führt und eine vierte Biegung (27), die den Griff (6) in die Richtung des zweiten Aussparungsraums (3) führt, und
wobei der Innenteil (9) und der Außenteil (10) des Griffs (6) ausgerichtet sind und die gleiche Form derart aufweisen, dass der Griff formsymmetrisch ist.

2. Süßwarenverpackung nach Anspruch 1, wobei die Basisoberfläche (15) mit mindestens zwei Nuten (22) versehen ist, die von einer Seitenwand (21a) zu der gegenüberliegenden Seitenwand (21b) der dritten Aussparung (20) verlaufen.

3. Süßwarenverpackung nach einem der Ansprüche 1 bis 2, wobei der Zwischenteil (11) des Griffs (6) eine flache untere Oberfläche aufweist.

4. Süßwarenverpackung nach einem der Ansprüche 1 bis 3, wobei der zweite Aussparungsraum (3) mit einer Verlängerung (30) versehen ist, die den Griff mittels einer Schnappverbindung mit dem Ende (29) des Griffs (6) fixiert.

5. Süßwarenverpackung nach einem der Ansprüche 1 bis 4, wobei die einfrierbare Süßware nicht eingefroren ist.

## Revendications

1. Emballage de confiserie comprenant
- un produit de moulage en plastique (1) comprenant une surface plane horizontale (5), un premier espace d'évidement (2) pour une confiserie, un deuxième espace d'évidement (3) pour une extrémité d'une poignée (6),
- une feuille de couverture plane (7) scellée à la surface plane (5) du produit de moulage en plastique (1),
- un volume d'une confiserie congelable ou congelée (8) telle que présente à l'intérieur du premier espace d'évidement (2), et
- une poignée (6) comprenant une partie intérieure (9) de la poignée (6) qui est positionnée à l'intérieur du volume de confiserie congelable ou congelée (8) dans le premier espace d'évidement (2) et une partie extérieure (10) qui, en cours d'utilisation, permettra au volume de confiserie congelable (8) d'être tenu manuellement par un utilisateur et laquelle partie extérieure (10) est positionnée dans le deuxième espace d'évidement (3), dans lequel la partie intérieure (9) de la poignée est reliée à la partie extérieure (10) de la poignée par une partie intermédiaire décalée (11) de la poignée, dans lequel
- la partie intermédiaire (11) de la poignée (6) est positionnée en dessous de la feuille de couverture plane (7) et positionnée dans un troisième espace d'évidement (20), lequel troisième espace d'évidement (20) relie des premier et deuxième espaces d'évidement et est pourvu d'une surface de base (15) sur laquelle repose la partie intermédiaire (11) de la poignée et est pourvue de parois latérales (21a, 21b) s'étendant le long de la partie intermédiaire (11), dans lequel la surface de base (15) est pourvue d'une ou plusieurs rainures (22), dans lequel la poignée (6) est constituée d'au moins 4 coudes, dans lequel un premier coude (23) se trouve entre la partie intérieure (9) et la partie intermédiaire (11) dirigeant la poignée depuis la confiserie vers la surface plane (5), un deuxième coude (24) qui dirige la partie intermédiaire (11) de la poignée le long de la surface plane (5), un troisième coude (26) qui dirige la poignée vers le deuxième espace d'évidement (3), et un quatrième coude (27) qui dirige la poignée (6) dans le sens du deuxième espace d'évidement (3), et
dans lequel la partie intérieure (9) et la partie extérieure (10) de la poignée (6) sont alignées et ont la même forme de telle sorte que la poignée a une forme symétrique.

2. Emballage de confiserie selon la revendication 1, dans lequel une surface de base (15) est pourvue d'au moins deux rainures (22) s'étendant d'une paroi latérale (21a) à la paroi latérale opposée (21b) du troisième évidement (20).

3. Emballage de confiserie selon l'une quelconque des revendications 1 à 2, dans lequel la partie intermédiaire (11) de la poignée (6) présente une surface inférieure plate.

4. Emballage de confiserie selon l'une quelconque des revendications 1 à 3, le deuxième espace d'évidement (3) est pourvu d'une extension (30) qui fixe la poignée au moyen d'un raccord à encliquetage avec l'extrémité (29) de la poignée (6).

5. Emballage de confiserie selon l'une quelconque des revendications 1 à 4, dans lequel la confiserie congelable n'est pas congelée.
